# EUROPÄISCHE PATENTSCHRIFT

(11) **EP 2 525 951 B1**
(45) Veröffentlichungstag und Bekanntmachung des Hinweises auf die Patenterteilung: **27.11.2013**
(21) Anmeldenummer: 11702385.3
(22) Anmeldetag: 17.01.2011
(51) Int. Cl.: B27N 3/04, B29C 47/10, C08J 3/20, C08J 5/04, B27N 3/28

(54) **VERFAHREN ZUR HERSTELLUNG EINES MIT LÄNGEREN FASERN GEFÜLLTEN POLYMEREN MATERIALS**
METHOD FOR PRODUCING A POLYMER MATERIAL FILLED WITH LONG FIBERS
PROCÉDÉ DE FABRICATION D'UNE MATIÈRE POLYMÈRE CHARGÉE PAR DES FIBRES PLUS LONGUES

(30) Priorität: 20.01.2010 AT 722010
(43) Veröffentlichungstag der Anmeldung: 28.11.2012
(73) Patentinhaber: EREMA Engineering Recycling Maschinen und Anlagen Gesellschaft m.b.H., 4052 Ansfelden (AT)
(72) Erfinder: HACKL, Manfred, A-4040 Linz-Urfahr (AT); FEICHTINGER, Klaus, A-4040 Linz (AT); WENDELIN, Gerhard, A-4030 Linz (AT); REISINGER, Walter, A-4663 Laakirchen (AT)
(74) Vertreter: Wildhack & Jellinek
(86) Internationale Anmeldenummer: PCT/AT2011/000027
(87) Internationale Veröffentlichungsnummer: WO 2011/088487

(56) Entgegenhaltungen:
- EP-A1- 2 025 484
- WO-A1-2006/079128
- WO-A1-2011/029904
- WO-A2-02/00408
- US-A1- 2009 130 377

## Beschreibung

Die vorliegende Erfindung betrifft ein Verfahren gemäß dem Oberbegriff des Anspruchs 1 bzw. eine Verwendung einer Vorrichtung zur Durchführung des Verfahrens gemäß Anspruch 14.

Füllstoffe werden in vielfacher Art und Weise mit verschiedenen Trägermaterialien gemischt. Als übliche Trägermaterialien sind aus dem Stand der Technik beispielsweise thermoplastische Kunststoffe bekannt.

Ein Füllstoff der für unterschiedliche Anwendungen immer öfter zum Tragen kommt, ist natürliches Holz in Form von Holzmehl bzw. kurzen Holzspänen. Weiters werden auch Papier- und Zellstofffasern als Füllstoffe zur Veränderung der Eigenschaften von Kunststoffen oder Harzen verwendet. Diese Holzmaterialien werden zur Zeit durchwegs mit einer Faserlänge von weniger als 2 mm eingesetzt.

Neben diesen Füllstoffen bzw. Fasern existieren grundsätzlich auch industriell hergestellte Holzfasern, wie beispielsweise Fasern aus Palmen, fasrigen Gräsern, wie Bambus, Hanf, Sisal etc.. Holz ist dabei nur im übertragenen Sinne zu verstehen. Diese industriell hergestellten Fasern weisen eine größere Länge auf und haben durchwegs eine Länge von mehr als 5 mm, vorzugsweise sogar eine Faserlänge zwischen 10 und 20 mm. Es gibt diverse Verfahren um solche technische Fasern gleichförmig reproduzierbar und günstig herzustellen.

Der Vorteil einer größeren Faserlänge liegt darin, dass diese längeren Fasern beispielsweise für Fertigprodukte, wie Profile, Panelle etc., wesentlich bessere mechanische Eigenschaften aufweisen, als dies bei kurzen Holzfasern unter 2 mm der Fall ist. Es besteht somit ein praktischer Bedarf, Produkte aus Materialien mit möglichst langen Fasern herzustellen.

Allerdings sind derartige Materialien mit langen Fasern relativ schwierig herzustellen. Während es bei der Herstellung von Trägermaterialien mit kurzen Fasern von unter 2 mm regelmäßig keine technologischen Schwierigkeiten, auch nicht bei der Extrusion, gibt, führt eine Beimischung von längeren Fasern mit beispielsweise einer Länge von über 5 mm im Extruder, beispielsweise bei Einschnecken-Extrudern, aber auch bei Doppelschnecken-Extrudern, zu einem sehr schlechtem Einzugs- bzw. Dosierverhalten der Extruders. Dies führt entweder zu einer Limitierung der Durchsätze oder es ist sogar gänzlich unmöglich nennenswerte Mengen der langen Fasern ins Trägermaterial einzubringen.

Wünschenswert kann die Zugabe von Fasern in einem Bereich von 10 bis 90 Gew.-% sein, was je nach Applikation variiert. Wenn kein thermoplastisches Polymer als Trägermaterial bzw. Bindemittel zum Einsatz kommt bzw. kommen kann und als Trägermaterial ein Duroplast bzw. ein Harz verwendet wird, gibt es Anwendungsfälle, in denen ein Faseranteil von mehr als 70%, insbesondere zwischen 80 und 90%, gefordert wird. Gerade dann, bei derart großen Mengen an langen Fasern, ist der Einzug in den Extruder sehr kritisch und wird bei einem schlechten Einzugsverhalten die Effizient bis zur Undurchführbarkeit beeinträchtigt.

Ein weiteres Problem besteht in der (Wasser)-Feuchte, die über die Fasern in das System eingebracht wird. Fasern haben, wie jeder Füllstoff, eine relativ große Oberfläche, auf der sich entsprechende große Mengen an Restfeuchte niederschlagen können.

Eine hohe Restfeuchte wirkt sich jedoch in der abschließenden Verdichtung bei erhöhter Temperatur, beispielsweise bei der Extrusion, als extrem hinderlich aus und beschränkt den Durchsatz und verringert die Produktqualität. So muss, beispielsweise bei der Extrusion eines mit Holzmehl gefütterten Trägermaterials, das Holzmehl sehr intensiv und aufwendig vorgetrocknet werden damit, beispielsweise bei Doppelschnecken, überhaupt noch ausreichende Durchsätze erzielt werden können. Ist die Feuchte zu hoch wird die Extruderentgasung überfordert, was zu Materialverlust bzw. zu einem gänzlichen Stopp der Anlage führen kann.

In diesem Zusammenhang besteht bei der Bearbeitung von hygroskopischen und/oder gegen hydrolytischen Abbau empfindlichen Trägermaterialien, beispielsweise Polykondensaten, wie Polyestern, insbesondere PET, ein zusätzliches Problem. Bei diesen Trägermaterialien führt nämlich eine zu große Restfeuchte im Aufnahmebehälter, gerade bei erhöhter Temperatur, zu einem hydrolytischen Abbau der Polymerketten und einer Verschlechterung der Qualität des erhaltenden Materials bzw. des Endprodukts. Aus diesem Grund muss gerade hier die Feuchtigkeit besonders gering gehalten werden.

Allerdings muss dabei berücksichtigt werden, dass jede Vortrocknung einen weiteren Verfahrensschritt bedeutet und dass eine zusätzliche Vortrocknung sowohl Zeit als auch Energie in Anspruch nimmt.

Auf der anderen Seite muss allerdings auch berücksichtigt werden, dass die auf den Fasern vorhandene Restfeuchte durchaus wichtig ist und eine Art Gleitmittel darstellt bzw. die Flexibilität der Fasern hoch hält. Dies ist für die Bearbeitung entscheidend. Werden beispielsweise die Rohfasern vor deren Zumischung bzw. deren Bearbeitung zu sehr getrocknet bzw. nahezu vollständig getrocknet, so sind die Fasern sehr spröde und brechen bereits bei geringer mechanischer Beanspruchung, das heißt bei der Aufbereitung im Schneidverdichter, aber spätestens bei der Extrusion, sehr leicht. Damit verkürzen sich die Faserlängen und die qualitativen Eigenschaften des Endproduktes verringern sich, da die Anteile an langen Fasern, beispielsweise an Fasern von über 5 mm Länge, dramatisch verringert sind bzw. überhaupt nur mehr kurze Fasern unter 2 mm Länge im Endprodukt vorliegen.

Die Restfeuchte der eingesetzten Rohfasern darf somit nicht zu hoch sein, da sich dies, spätestens bei der Extrusion, negativ auf das Trägermaterial bzw. das Polymer oder das Extrusionsverhalten auswirken würde. Andererseits darf die Restfeuchte auch nicht zu gering sein, da die Fasern sonst während der Bearbeitung brechen würden und erst recht wieder nur kurze Fasern und dadurch ein qualitativ nachteiligeres Endprodukt vorliegen würden.

Es ist somit Aufgabe der Erfindung, ein Verfahren zur Herstellung eines mit längeren Fasern einer gewissen Mindestlänge gefüllten polymeren Materials zu schaffen, wobei das Verfahren gleichzeitig hohe Durchsätze und ein qualitativ hochwertiges Endprodukt liefert, in dem insbesondere die ursprüngliche größere Länge der Fasern erhalten geblieben ist.

Diese Aufgabe wird durch die kennzeichnenden Merkmale des Anspruchs 1 gelöst.

Bei dem erfindungsgemäßen Verfahren zur Herstellung eines mit längeren Fasern gefüllten polymeren Materials werden die, üblicherweise eine gewisse Restfeuchte von etwa 5 bis 8 % aufweisenden, Fasern mit einer Mindestlänge von über 2 mm und das Trägermaterial in einem Reaktor, Aufnahmebehälter bzw. Schneidverdichter unter ständiger Bewegung und gegebenenfalls Zerkleinerung des Trägermaterials und unter ständiger Erhaltung der Rieselfähigkeit bzw. Stückigkeit, gemischt und erwärmt.

Die Bewegung ist wichtig, da dadurch ein Zusammenklumpen bzw. ein Zusammenkleben des Materials verhindert wird. Eine intensive Bewegung ist insbesondere bei thermoplastischen Kunststoffen erforderlich, da Kunststoffmaterialien bei erhöhter Temperatur erweichen und klebrig Werden und verklumpen bzw. zusammenbacken würden, wenn nicht eine ständige Durchmischung und Durchrührung erfolgen würde. Das Mischen dient somit auch dazu, das Rohmaterial im Aufnahmebehälter bzw. Reaktor auch bei erhöhten Temperaturen noch rieselfähig und stückig zu halten.

Die Temperaturerhöhung dient einerseits dazu, das Trägermaterial in einen erweichteren bzw. klebrigen Zustand zu versetzen, wodurch die Ankoppelung der Fasern an das Trägermaterial erleichtert wird. Es erfolgt in der Regel noch kein Aufschmelzen des Materials. Durch die Temperaturerhöhung wird somit eine innigere Vermischung zwischen Fasern und Trägermaterial gewährleistet und auch die Mischung auf eine nachfolgende weitere Verdichtung, insbesondere die Extrusion, vorbereitet.

Zudem bewirkt eine Temperaturerhöhung eine gewisse Trocknung des Trägermaterials und auch der Fasern, die, wie oben festgestellt, erforderlich ist, um die Durchsatzleistung des Extruders zu garantieren bzw. die Qualität des Materials zu sichern. Es wird somit durch die Temperaturerhöhung ein gewisser Anteil an Restfeuchte entfernt und die Fasern getrocknet.

Die Anmelderin hat erkannt, dass im Reaktor ganz besondere Bedingungen eingestellt werden müssen, um ein erfolgreiches Verfahren zu gewährleisten.

Die Fasern, wie auch das Trägermaterial, sollen einerseits auf eine möglichst geringe Restfeuchte getrocknet werden. Diese Trocknung muss allerdings rechtzeitig gestoppt werden bzw. darf nicht zu einer vollständigen Austrocknung der Fasern führen, sondern darf nur so weit betrieben werden, dass die Fasern gerade noch ausreichend flexibel bzw. biegsam sind, um bei der Bearbeitung im Reaktor und einer gegebenenfalls anschließenden Verdichtung im Extruder nicht zu brechen.

Auf diese Weise wird gewährleistet, dass die Fasern einigermaßen trocken sind und keine störende Feuchtigkeit in den Extruder eingebracht wird, aber trotzdem ausreichend flexibel bleiben, um nicht zu brechen. Dadurch bleiben ihre Längen erhalten und die gewünschten Endprodukte weisen die - nur mit langen Fasern erhältlichen - qualitativen Vorteile auf.

Es bedarf somit einer sorgfältigen Abwägung zweier gegensätzlicher Anforderungen, einerseits--der Trocknung und andererseits der Faserlänge. Die Anmelderin hat erkannt, dass sich das aus dem Stand der Technik bekannte Problem auf diese Weise bzw. durch Einhaltung obiger Verfahrens- und Vorrichtungsmerkmale lösen lässt.

Durch das erfindungsgemäße Verfahren ist es zudem möglich, die Fasern direkt im Reaktor, d.h. in einem einzigen Verfahrenschritt, gleichzeitig mit dem Trägermaterial zu behandeln, sodass die Mischung und die Trocknung in einem gemeinsamen Verfahrensschritt erfolgen kann. Dadurch entfällt die Notwendigkeit, die Rohfasern in einem separaten Schritt vorab zu trocknen, wodurch das Verfahren effizienter und energiesparender geführt werden kann.

Auf die erfindungsgemäße Weise kann somit in einem raschen Verfahren sicher gesteuert werden, wie die Fasern getrocknet werden müssen bzw. wann der Endpunkt der Trocknung erreicht ist bzw. kann auf diese Weise der Grad der Trocknung mit der Intensität der Mischung bzw. der Einstellung der erforderlichen Temperatur vorteilhaft korreliert werden.

Mit dem erfindungsgemäßen Verfahren werden die Fasern so schonend wie möglich und unter Beibehaltung ihrer Länge in ein Trägermaterial eingearbeitet, ohne dass die Fasern dabei brechen. Es ist auf diese Weise möglich, mit dem vorteilhaften Verfahren ein Trägermaterial zu erhalten, in dem Fasern mit großer Länge eingebettet sind, wobei die Fasern im Trägermaterial gleichmäßig verteilt sind und die Fasern möglichst vollständig und nicht als Fragmente bzw. Bruchstücke vorliegen.

Weitere vorteilhafte Ausgestaltungen des Verfahrens ergeben sich durch die Merkmale der abhängigen Ansprüche:
Gemäß einer vorteilhaften Ausgestaltung des Verfahrens ist vorgesehen, dass die Fasern auf eine Restfeuchte zwischen 1 und 2 % getrocknet werden. Damit verbleibt noch weniger Feuchtigkeit im Produkt, die Fasern bleiben jedoch ausreichend flexibel.

Besonders vorteilhaft ist es, wenn vorgesehen ist, dass zur Mischung und Erwärmung des Trägermaterials bzw. der Fasern im Reaktor zumindest ein, gegebenenfalls auf mehreren übereinanderliegenden Ebenen angeordnetes, insbesondere um eine vertikale Achse, umlaufendes bzw. drehbares Misch- bzw. Zerkleinerungswerkzeug, mit auf das Gut mischend und gegebenenfalls zerkleinernd einwirkenden Arbeitskanten, eingesetzt wird, wobei die Erwärmung zumindest teilweise, insbesondere vollständig, durch Beaufschlagung des Materials mit mechanischer Energie bzw. Reibung erfolgt. Mit einer solchen Vorrichtung lässt sich die Einstellung der Parameter besonders gut steuern.

Gemäß einer weiteren Ausgestaltung des Verfahrens, ist es vorteilhaft, wenn die Mischwerkzeuge das Trägermaterial bzw. die Mischung spachtelartig unter ständiger Beibehaltung des Druckes bzw. der Dichte sowie der Rieselfähigkeit bzw. Stückigkeit des Materials, in ein Gehäuse einer an den Reaktor direkt angeschlossenen Austragseinheit, vorzugsweise einer Förderschnecke, einer Extruderschnecke, einer Doppelschnecke od. dgl., stopfen bzw. mittels force-feeding hineindrücken. Würde man beispielsweise in einen offenen Trichter fördern, so würde man einerseits die Dichte verlieren und das Material würde sofort zusammenbacken. Auf diese Weise wäre ein gleichmäßiger Einzug in den Extruder nicht mehr gewährleistet.

Es hat sich überraschender Weise gezeigt, dass das erfindungsgemäße Verfahren in besonders bevorzugter Weise mit einer aus dem Stand der Technik bekannten Schneidverdichter-Extruder-Kombination durchgeführt werden kann, bei der der Extruder direkt an den unteren Bereich des Reaktor angeschlossen ist. Mit einer solchen Vorrichtung können auf sehr einfache Weise Fasern mit großer Länge schonend und ohne zu brechen in ein Trägermaterial eingebracht werden. Es werden dabei mehrere Vorteile dieses kombinierten Systems ausgenutzt. So wird beispielsweise der Extruder durch die Mischwerkzeuge im Reaktor zwangsgefüttert. Die nachfolgende Schnecke kann je nach Anwendungsfall als vollständige Extrusionsschnecke ausgeführt sein, die das aufbereitete Material je nach Mischung entweder in ein Granulat oder in ein Endprodukt, beispielsweise eine Platte oder ein Profil überführt. Durch den Einsatz dieser Vorrichtung ist gewährleistet, dass nicht nur eine gute Durchmischung zwischen den Fasern und dem Trägermaterial erfolgt, sondern auch, dass die Mischung eine gewisse Vorverdichtung erfährt. Durch die Erhaltung der Rieselfähigkeit und gleichzeitig des Druckes ist eine gleichmäßige Fütterung des direkt angeschlossenen Extruders gewährleistet und auch wird ein teilweises Leerlaufen vermieden. Durch die Reduzierung der Feuchtigkeit ist eine weitere Verdichtung bis zur Überführung in eine blasenfreie Schmelze möglich.

Es ist zur Erhaltung der Rieselfreudigkeit generell vorteilhaft, wenn kein vollständiges Aufschmelzen des Trägermaterials erfolgt. Allerdings müssen die Trägermaterialien zumindest bis zu einem gewissen Grad erweichbar sein, um eine gute Mischung mit den Fasern zu gewährleisten.

Als Trägermaterial wird vorteilhafterweise ein polymeres bzw. makromolekulares Material, insbesondere ein natürliches Polymer, beispielsweise Cellulose oder Lignin, oder ein synthetisches Polymer, beispielsweise ein Kunststoff, vorzugsweise ein thermoplastischer Kunststoff oder ein unvernetzter bzw. nicht gehärteter duroplastischer Kunststoff, oder ein natürliches oder synthetisches Harz, eingesetzt. Als mögliche Trägermaterialien kommen beispielsweise auch Paraffine, Wachse, Öle etc. in Frage.

Die vorteilhafte Behandlung des polymeren Trägermaterials, insbesondere eines thermoplastischen Materials, im Reaktor erfolgt bei einer Temperatur oberhalb der Glasübergangstemperatur und unterhalb des Schmelzbereiches, vorzugsweise bei einer Temperatur, bei der das Material in einem erweichten Zustand vorliegt. Dabei wird das Material auch gleichzeitig kristallisiert, getrocknet und/oder gereinigt oder es kann gegebenenfalls sogar die Viskosität erhöht werden. Vorzugsweise wird das Material auf eine Temperatur im Bereich des VICAT-Erweichungspunktes erwärmt. Die VICAT Erweichungstemperatur kann gemäß DIN ISO 306 ermittelt werden. Die Fasern werden dann zu dem so vorbehandelten Polymermaterial zugemischt. Wenn das Kunststoffmaterial in einem erweichten Zustand vorliegt, bei dem das Material noch nicht geschmolzen ist und die Flakes noch einzeln vorliegen, ist die Oberfläche bereits erweicht und die Poren sind offen. Auf diese Weise hat das Trägermaterial eine sehr hohe Oberfläche und können die Fasern leicht in das Polymermaterial eindringen und die Mischung wird gleichmäßiger.

Wird als Trägermaterial ein thermoplastisches Kunststoffpolymer eingesetzt, so erfolgt die Bearbeitung des Kunststoffmaterials vorteilhafterweise bei einer Temperatur von 70° bis 240°C, vorzugsweise 130° bis 210°C, gegebenenfalls unter einem Vakuum von ≤ 150 mbar, vorzugsweise ≤ 50 mbar, insbesondere ≤ 20 mbar, insbesondere zwischen 0,1 bis 2 mbar, und die Kunststoffmaterialien verbleiben üblicherweise für eine mittlere Verweilzeit von 10 min bis 200 min, insbesondere von 40 min bis 120 min, im Reaktor.

Als Trägermaterial kann auch ein noch nicht gehärtetes duroplastisches Polymer bzw. Harz eingesetzt werden, wobei derartige Harze insbesondere dann eingesetzt werden, wenn Fasern in großen Mengen insbesondere mehr als 70 Gew%, vorzugsweise zwischen 80 und 90 Gew% enthalten sein sollen. Bei derartigen Faseranteilen ist der Einzug in den Extruder besonders kritisch.

Die Fasern und das Trägermaterial können in beliebiger Reihenfolge nacheinander in den Reaktor eingebracht werden, wobei es bei staubenden, feinen Fasern vorteilhaft ist, wenn zuerst das Trägermaterial und erst dann die Fasern zugegeben werden. Alternativ können Fasern und Trägermaterial auch gleichzeitig zugegeben werden.

Dabei kann sogar ein solches Ausgangsmaterial zugegeben werden, bei dem das Trägermaterial und die Fasern bereits innig miteinander verquickt sind bzw. in einem gemeinsamen Ausgangsprodukt vorliegen. Dieser Fall ist beispielsweise bei Holzfasern gegeben, da den Holzfasern bereits das Trägermaterial in Form von Lignin, und gegebenenfalls auch Cellulose und/oder Pektinen, anhaftet. Zu einem solchen Material wird abschließend in Extruder oft ein synthetisches Polymer, z.B. PP, zugegeben.

Gemäß einem weiteren vorteilhaften Verfahrensschritt wird das Material im Reaktor unter Vakuumbedingungen, insbesondere im Bereich des Grobvakuums (ca. 300 bis 1 mbar) oder des Feinvakuums Grobvakuums (ca. 1 bis 10⁻³ mbar), behandelt. Auf diese Weise wird die Trocknung unterstützt und die Temperatur kann, falls erforderlich, geringer gehalten werden, wodurch das Verfahren unter schonenderen Bedingungen durchgeführt werden kann.

Gemäß einer weiteren vorteilhaften Ausgestaltung des Verfahrens ist es möglich, die Fasern und das Trägermaterial entweder gleichzeitig im Reaktor vorzulegen und erst dann die Temperatur zu erhöhen und die Mischung zu bewegen. Es ist aber auch möglich das Trägermaterial im Reaktor vorzuwärmen und beispielsweise dessen Oberfläche in einen erweichten und klebrigen Zustand zu bringen, wobei allerdings darauf geachtet werden sollte, dass die Stückigkeit des Materials erhalten bleibt. Auf diese Weise kann eine Staubentwicklung bei der Zugabe der Fasern vermieden werden, was insbesondere bei gesundheitsschädlichen Fasern vorteilhaft ist. In diesem Fall haften die Fasern nämlich sofort nach Zugabe an der klebrigen Oberfläche des Materials an. In diesem Zusammenhang kann auch vorteilhafterweise vorgesehen sein, dass die Zugabe der Fasern im Bereich unterhalb des Niveaus bzw. der Mischthrombe des umlaufenden Materials erfolgt.

Als Fasern werden beispielsweise anorganische oder organische Fasern eingesetzt.

Die Länge der Fasern liefert entscheidende mechanische Eigenschaften im Endprodukt. So ist es für die mechanischen Eigenschaften des Endproduktes vorteilhaft, wenn die Länge der Fasern über 2 mm, vorzugsweise 5 mm, und insbesondere zwischen 10 und 20 mm, beträgt.

Die Fasern werden üblicherweise in einer Menge von 10 bis 90 Gew% bezogen auf das Gesamtgewicht der Mischung eingesetzt.

Die Eindosierung der Fasern in den Reaktor kann volumetrisch oder gravimetrisch erfolgen. Der Austrag der Mischung aus dem Reaktor zur Schnecke kann ungeregelt oder geregelt von einer nachfolgenden Schmelzepumpe bzw. von einer Füllstandsmessung im Schneidverdichter erfolgen. Die Austragsschnecke bzw. der Extruder werden dann entweder vom Vordruck vor der Schmelzepumpe oder vom Füllstand im Schneidverdichter, so in ihrer Drehzahl verändert, dass der Druck bzw. der Füllstand konstant bleiben.

Es hat sich bei der Verarbeitung von schlecht fließenden Fasern als vorteilhaft erwiesen, sowohl eine gravimetrische Dosierung in dem Schneidverdichter, als auch einen definierten Abzug der Mischung aus diesem durchzuführen. Insbesondere dann, wenn damit ein Endprodukt erzeugt wird oder damit ein nachfolgender Extruder mit dem verdichteten Gut beschickt wird.

Es sind hierbei verschiedene Ausführungsformen möglich:
Einerseits ist die Verdichtung und Beschickung eines Fremdextrusionssystems möglich. Dabei wird ein verdichtetes, rieselfähiges Gut mit einer längst möglichen Faserlänge erzeugt. Gegebenenfalls können Gleitmittel und andere Füllstoffe bzw. Hilfsstoffe zugesetzt werden. Dieses verdichtete Gut wird ohne Verlust der Verdichtung z.B. einer Doppelschnecke zugeführt. Dort erfolgt die Einmischung in ein Polymer, z.B. Polypropylen, in einem definierten Mischungsverhältnis. Dann wird z.B. ein Profil oder Panel direkt extrudiert. Es kann das Material auch in eine offene Form extrudiert werden und durch eine Presse in eine gewünschte Form gebracht werden.

Andererseits ist eine Direktextrusion oder Granulierung mit einem System aus einem Reaktor bzw. Schneidverdichter und einem Extruder möglich. Die Mischung aus dem Schneidverdichter bzw. Reaktor stellt an sich schon ein extrudierbares Gemisch dar bzw. entspricht schon weitgehend der Endrezeptur. Das Material kann nun in einem Strang gebracht werden und granuliert werden oder es kann ein Endlosprofil erzeugt werden.

Erfindungsgemäß ist weiters die besondere Verwendung der zuvor erwähnten Vorrichtung zur Durchführung des besagten Verfahrens vorgesehen. Diese Vorrichtung umfasst einen Reaktor bzw. Schneidverdichter und eine daran angeschlossene Austragseinheit, vorzugsweise eine Förderschnecke, Extruderschnecke, Doppelschnecke od. dgl., wobei im Reaktor zur Mischung und Erwärmung des Materials zumindest ein, gegebenenfalls auf mehreren übereinanderliegenden Ebenen angeordnetes, insbesondere um eine vertikale Achse umlaufendes bzw. drehbares, Misch- bzw. Zerkleinerungswerkzeug mit auf das Gut mischend und gegebenenfalls zerkleinernd einwirkenden Arbeitskanten, angeordnet ist. Die Erwärmung erfolgt zumindest teilweise, vorzugsweise ausschließlich, durch Beaufschlagung des Materials mit mechanischer Energie bzw. Reibung. Die Mischwerkzeuge stopfen bzw. fördern das Material bzw. die Mischung spachtelartig unter ständiger Beibehaltung des Druckes bzw. der Dichte sowie der Rieselfähigkeit bzw. Stückigkeit des Materials in das Gehäuse der an den Reaktor angeschlossenen Austragseinheit.

Es hat sich überraschend gezeigt, dass unter Einsatz einer solchen Vorrichtung und unter Einhaltung der Verfahrensparameter die geforderten Ergebnisse erreichbar sind.

Es ist bekannt, dass Fasern mit einer Länge von über 5 mm zu einem sehr schlechten Einzugs- bzw. Dosierverhalten des Extruders führen. Wird nun, gemäß einer vorteilhaften Ausgestaltung, die aus dem Schneidverdichter kommende vorverdichtete Mischung in eine angeschlossene Schnecke zwangsgefördert und kurz vor dem Extruder bzw. im Extruder die Temperatur auf etwa 160°C erhöht, so erhält das Trägermaterial die nötigen Fließeigenschaften, um den Werkstoff teigig bzw. verformbar zu machen. Durch dieses Verfahren gelingt es trotz eines Extrusionsvorganges eine gleichmäßige dreidimensionale Faserstruktur mit einer entsprechenden Anzahl von Koppelpunkten zwischen den Fasern in dem Werkstück zu erzeugen. Diese Struktur ist wesentlich für diverse Anwendungen, beispielsweise in der Photovoltaik im Brandschutz für Fensterprofile in der Autoindustrie bzw. der Luftraumfahrt. Die Harze dienen als Klebepunkte zwischen den einzelnen Fasern.

Es ist weites möglich, dass das Verfahren einstufig in einem einzigen Reaktor oder im Einzugsbereich eines Extruders geführt wird bzw. dass das, gegebenenfalls bereits mit dem Füllstoff versetzte, Kunststoffmaterial in einem einzigen Arbeitsgang, insbesondere in einem einzigen Reaktor, erwärmt, getrocknet, kristallisiert und gereinigt wird und/oder dass das Verfahren mit oder ohne Vortrocknung und/oder mit oder ohne Vorkristallisation des Kunststoffmaterials durchgeführt wird.

Es ist weites möglich, dass das Verfahren mehrstufig, insbesondere zweistufig, geführt wird, wobei zwei oder mehr Aufnahmebehälter bzw. Reaktoren in Serie und/oder parallel angeordnet werden und das zu verarbeitende, gegebenenfalls bereits mit dem Füllstoff versetzte, Kunststoffmaterial diese Behälter der Reihe nach durchläuft, wobei vorzugsweise die Verfahrensbedingungen gemäß den vorangehenden Ansprüchen, für zumindest einen, insbesondere für den zuerst beschickten Behälter bzw. für die Vorbehandlung, angewendet werden, wobei das Kunststoffmaterial vorzugsweise in einer vorgelagerten Vorbehandlung auf eine Temperatur, insbesondere nahe der Prozesstemperatur der Hauptbehandlung, gebracht wird.

Es ist weiters möglich, dass das Kunststoffmaterial in der ersten Stufe einer Vorbehandlung, insbesondere unter Vakuumbedingungen, durch Beaufschlagung mit mechanischer Energie unterworfen und dadurch erwärmt und bei erhöhter Temperatur getrocknet und gegebenenfalls gleichzeitig kristallisiert wird, und dass anschließend in einer einem allfälligen Plastifizieren bzw. Aufschmelzen vorangehenden zweiten Stufe eine Hauptbehandlung des Kunststoffmaterials erfolgt, bei der das Kunststoffmaterial, insbesondere unter Vakuumbedingungen, erneut durch Beaufschlagung mit mechanischer Energie unter Bewegung getrocknet und weiter kristallisiert wird, wobei diese Hauptbehandlung insbesondere bei einer gegenüber der Vorbehandlung erhöhten Temperatur erfolgt, wobei die Temperatur der Hauptbehandlung insbesondere unter der Plastifizierungstemperatur bzw. Schmelztemperatur des Kunststoffmaterials gehalten wird.

Die Fasern können sowohl im ersten Behälter als auch im zweiten Behälter zugeführt werden. Die fertigen Mischungen werden dann kontinuierlich in einen weiteren Behälter gebracht, wo die Durchmischung, die Erwärmung auf den Betriebspunkt und die Beschickung in den Extruder durchgeführt wird.

Es ist weiters möglich, dass das Kunststoffmaterial in kontinuierlichem Strom der Vorbehandlung unterzogen wird und/oder dass das Verfahren kontinuierlich oder diskontinuierlich bzw. als Batch-Prozess geführt wird.

Die Feuchte der Fasern kann mit Hilfe einer im Schneidverdichter eingebauten Wassereinspritzung reguliert werden. Als Rückinformation dient dabei der Druck der Austragschnecke und das Drehmoment der Austragsschnecke. Das Drehmoment der Austragschnecke ist bei zu großer Feuchte nicht mehr stabil. Es erfolgt dann kein gleichmäßiger Transport der Fasern durch das Auftreten von Dampfblasen, die den Transport behindern. Bei zu geringer Feuchte erhöht sich das Drehmoment durch die geringere Förderwirkung durch abnehmende Gleitreibung und es erhöht sich auch der Werkzeugdruck durch Abnahme der Gleiteigenschaften im Werkzeug

Die Erfindung wird nun im folgenden exemplarisch und nicht einschränkend durch zwei besonders bevorzugte Ausführungsbeispiele beschrieben:

### Beispiel 1:

### Holzfasern mit Polypropylen

Das Verfahren wird in einer aus dem Stand der Technik seit langem bekannten Schneidverdichter-Extruder-Kombination geführt, beispielsweise in einer VACUREMA® Anlage. Hierbei ist ein im wesentlichen zylindrischer Aufnahmebehälter bzw. Schneidverdichter vorgesehen, in dessen Inneren, um eine vertikale Achse, Schneid- und Mischwerkzeuge drehbar gelagert sind, die für eine Durchmischung und gegebenenfalls Zerkleinerung des Behälterinhaltes sorgen. Im untersten Bereich knapp über dem Behälterboden bzw. auf Höhe der untersten Mischwerkzeuge ist ein Extruder zum Aufschmelzen des Polymers angeordnet. Die Mischwerkzeuge sind dabei so angeordnet und betrieben, dass sie das Material mittels force-feeding in den Extruder hineindrücken. Im Schneidverdichter wird das Material somit gemischt, erwärmt, jedoch ohne aufzuschmelzen, und verbleibt dort für eine gewisse Verweilzeit.

Im vorliegenden Fall rotiert das Mischwerkzeug bei einer Umdrehung von etwa 1500 Umdrehungen pro Minute. Die Temperatur im Schneidverdichter beträgt etwa 140°C, wobei die Temperatur über die Reibung der Mischwerkzeuge ins Material eingebracht wird. Das Polypropylen befindet sich dadurch in einem erweichten Zustand nahe seiner VICAT-Erweichungstemperatur. Das Material ist aber weiterhin stückig.

Von oben werden Holzfasern mit einer Länge von 15 mm und einer Restfeuchtigkeit von 6 Gew.-% zugegeben und innig eingemischt.

Sowohl das Polypropylen (das Polypropylen kann von seiner Form ein Mahlgut von dickwandigen Produkten, Fasern, Vlies oder auch Folien sein) als auch die Holzfasern werden kontinuierlich zugeführt bei einem Polypropylen-Durchsatz von etwa 500 kg/h und einem Holzfaser-Durchsatz von etwa 200 kg/h. Die Verweilzeit der Materialien im Schneiverdichter beträgt etwa 20 Minuten. Dabei reduziert sich die Feuchtigkeit der Fasern auf einen Gehalt von 1,5 %. In weiterer Folge wird das innig gemischte Material in den Extruder eingestopft und dort aufgeschmolzen. Danach erfolgt die Verarbeitung zu dem gewünschten Endprodukt.

Bei einer Untersuchung des Materials hat sich gezeigt, dass nur ein sehr geringer Anteil der Fasern gebrochen war und über 95 % der Fasern noch eine Länge von über 15 mm aufwiesen. Außerdem war die Produktqualität der Kunststoffmatrix sehr gut, insbesondere kam es zu keiner Blasenbildung bzw. Verfärbungen.

### Beispiel 2:

### Holzfasern in Holz (Lignin) mit Polypropylen

Das Verfahren wird in einer Vorrichtung wie in Beispiel 1 geführt. Dabei wird zerkleinertes Holz, enthaltend u.a. Lignin und Holzfasern, kontinuierlich mit einem Durchsatz von etwa 60 kg/h in den Reaktor eingebracht und bei einer Temperatur von 124°C bis 128°C bei einer Drehzahl der Mischwerkzeuge von ca. 1900 U/min für eine Verweilzeit von ca. 15 min bearbeitet. Dabei werden die Fasern ohne zu brechen getrocknet.

Das so behandelte Material wird dann kontinuierlich in den Extruder gestopft und dort in aufgeschmolzenes Polypropylen eingemischt.

Dadurch entsteht ein mit Holzfasern gefülltes Polypropylen, in dem über 92 % der Fasern noch eine Länge von über 15 mm aufweisen.

## Patentansprüche

1. Verfahren zur Herstellung eines mit längeren Fasern gefüllten polymeren Materials, wobei die, eine gewisse Restfeuchte von etwa 5 bis 8 % aufweisenden, Fasern mit einer Mindestlänge von über 2 mm und ein Trägermaterial in einem Reaktor bzw. Schneidverdichter unter ständiger Bewegung, und gegebenenfalls Zerkleinerung, des Trägermaterials und unter ständiger Erhaltung der Rieselfähigkeit *oder* Stückigkeit, gemischt und erwärmt werden, **dadurch gekennzeichnet, dass** die Bedingungen, insbesondere die Temperatur, im Reaktor bzw. Schneidverdichter so eingestellt werden, dass die Fasern auf eine möglichst geringe Restfeuchte getrocknet werden, bei der die Fasern gerade noch ausreichend flexibel sind, dass sie weder bei der Bearbeitung im Reaktor bzw. Schneidverdichter noch bei einer gegebenenfalls anschließenden Verdichtung, beispielsweise einer Extrusion, brechen.

2. Verfahren nach Anspruch 1, **dadurch gekennzeichnet, dass** die Fasern auf eine Restfeuchte zwischen 1 und 2 % getrocknet werden.

3. Verfahren nach Anspruch 1 oder 2, **dadurch gekennzeichnet, dass** zur Mischung und Erwärmung des Trägermaterials und der Fasern im Reaktor bzw. Schneidverdichter zumindest ein, gegebenenfalls auf mehreren übereinanderliegenden Ebenen angeordnetes, insbesondere um eine vertikale Achse, umlaufendes, drehbares Misch- und/oder Zerkleinerungswerkzeug, mit auf das Gut mischend und gegebenenfalls zerkleinernd einwirkenden Arbeitskanten, eingesetzt wird, wobei die Erwärmung zumindest teilweise, vorzugsweise vollständig, durch Beaufschlagung des Materials mit mechanischer Energie *oder* Reibung erfolgt.

4. Verfahren nach einem der Ansprüche 1 bis 3, **dadurch gekennzeichnet, dass** die Misch- *und*/*oder* Zerkleinerungswerkzeuge das Trägermaterial bzw. die Mischung spachtelartig, unter ständiger Beibehaltung des Druckes *oder* der Dichte sowie der Rieselfähigkeit Stückigkeit des Materials, in ein Gehäuse einer an den Reaktor bzw. Schneidverdichter direkt angeschlossenen Austragseinheit, vorzugsweise einer Förderschnecke, einer Extruderschnecke oder einer Doppelschnecke stopfen bzw. mittels force-feeding hineindrücken.

5. Verfahren nach einem der Ansprüche 1 bis 4, **dadurch gekennzeichnet, dass** als Trägermaterial zumindest ein polymeres bzw. makromolekulares Material, insbesondere ein natürliches Polymer, beispielsweise Cellulose oder Lignin, oder ein synthetisches Polymer, beispielsweise ein Kunststoff, vorzugsweise ein thermoplastischer Kunststoff oder ein unvernetzter duroplastischer Kunststoff, oder ein natürliches oder synthetisches Harz, eingesetzt wird.

6. Verfahren nach einem der Ansprüche 1 bis 5, **dadurch gekennzeichnet, dass** die Fasern und das Trägermaterial nacheinander in den Reaktor bzw. Schneidverdichter zugegeben werden, wobei die Fasern vorzugsweise zu dem bereits vorerwärmten, insbesondere erweichten, Trägermaterial zugegeben werden.

7. Verfahren nach einem der Ansprüche 1 bis 5, **dadurch gekennzeichnet, dass** die Fasern gleichzeitig mit dem Trägermaterial in den Reaktor bzw. Schneidverdichter zugegeben und behandelt werden, wobei insbesondere ein bereits mit Fasern gefülltes Trägermaterial zugegeben wird, in dem das Trägermaterial und die Fasern bereits gemeinsam vorliegen bzw. miteinander verquickt sind, z.B. Holz, Cellulose, Lignin *oder* Pektin, in dem Holzfasern enthalten sind.

8. Verfahren nach einem der Ansprüche 1 bis 7, **dadurch gekennzeichnet, dass**, insbesondere wenn als Trägermaterial ein thermoplastisches Polymermaterial eingesetzt wird, die Behandlung des Materials im Reaktor bzw. Schneidverdichter bei einer Temperatur oberhalb der Glasübergangstemperatur und unterhalb des Schrnelzbereiches erfolgt, vorzugsweise bei einer Temperatur bei der das Material in einem erweichten Zustand vorliegt, vorzugsweise im Bereich des VICAT-Erweichungspunktes (gemäß DIN 306, A, 10N, 50 K/h) und das Material dadurch vorzugsweise, insbesondere in einem einzigen gemeinsamen Schritt, kristallisiert, getrocknet und/oder gereinigt wird.

9. Verfahren nach einem der Ansprüche 1 bis 8, **dadurch gekennzeichnet, dass** die Fasern in einer Menge von 10 bis 90 Gew%, bezogen auf das Gesamtgewicht der Mischung eingesetzt werden, wobei, wenn als Trägermaterial ein nicht gehärtetes duroplastisches Harz *oder* Polymermaterial eingesetzt werden, Fasern in einer Menge von mehr als 70 Gew%, insbesondere zwischen 80 und 90 Gew%, zugegeben werden.

10. Verfahren nach einem der Ansprüche 1 bis 9, **dadurch gekennzeichnet, dass** die Behandlung im Reaktor bzw. Schneidverdichter unter Vakuumbedingungen, insbesondere im Bereich des Grob- oder Feinvakuums, erfolgt.

11. Verfahren nach einem der Ansprüche 1 bis 10, **dadurch gekennzeichnet, dass** als Fasern anorganische Fasern, beispielsweise aus Glas oder Graphit, und/oder organische Fasern, beispielsweise Holzfasern, insbesondere Fasern aus Palmen, Bambus, Hanf *und*/*oder* Sisal eingesetzt werden.

12. Verfahren nach einem der Ansprüche 1 bis 11, **dadurch gekennzeichnet, dass** die Fasern eine Länge über 5 mm, vorzugsweise zwischen 10 und 20 mm, aufweisen.

13. Verfahren nach einem der Ansprüche 1 bis 12, **dadurch gekennzeichnet, dass** die Mischung abschließend unter ständiger Erhaltung des Druckes bzw. der Dichte sowie der Rieselfähigkeit bzw. Stückigkeit aus dem Reaktor bzw. Schneidverdichter ausgebracht und einer weiteren Verdichtung, beispielsweise einer Extrusion, unterzogen wird.

14. Verwendung einer Vorrichtung zur Durchführung des Verfahrens gemäß einem der Ansprüche 1 bis 13, mit einem Reaktor bzw. Schneidverdichter und einer daran angeschlossenen Austragseinheit, vorzugsweise einer Förderschnecke, einer Extruderschnecke *oder* einer Doppelschnecke, wobei im Reaktor bzw. Schneidverdichter zur Mischung und Erwärmung des Materials zumindest ein, gegebenenfalls auf mehreren übereinanderliegenden Ebenen angeordnetes, insbesondere um eine vertikale Achse umlaufendes, drehbares. Misch- *und*/*oder* Zerkleinerungswerkzeug mit auf das Gut mischend und gegebenenfalls zerkleinernd einwirkenden Arbeitskanten, angeordnet ist, wobei die Erwärmung zumindest teilweise, insbesondere ausschließlich, durch Beaufschlagung des Materials mit mechanischer Energie *oder* Reibung erfolgt, und wobei die *Misch- und*/*oder Zerkleinerungswerkzeuge* das Material bzw. die Mischung spachtelartig unter ständiger Beibehaltung des Druckes bzw. der Dichte sowie der Rieselfähigkeit *oder* Stückigkeit des Materials in das Gehäuse der an den Reaktor bzw. Schneidverdichter angeschlossenen Austragseinheit stopfen bzw. fördern.

## Claims

1. A method for producing polymeric material filled with longer fibers, in which the fibers having a certain residual moisture of approximately 5 to 8 % with a minimal length of over 2 mm, and a carrier material are mixed and heated in a reactor or cutting compactor while constantly agitated, and optional shredding of the carrier material, and while constantly maintaining pourability or lumpiness, **characterized in that** the conditions, in particular the temperature within the reactor or cutting compressor are set in a way that the fibers are dried up to contain as little residual moisture as possible, and at which the fibers are still sufficiently flexible so as not to break neither during treatment in the reactor or cutting compressor, nor during an optional subsequent compression like, for example, an extrusion .

2. The method according to claim 1 **characterized in that** fibers are dried up to a residual moisture content between 1 and 2 %.

3. The method according to any of claim 1 or 2 **characterized in that** a mixing and/or shredding tool will be applied for mixing and heating of the carrier material that is arranged on at least one and optionally on various superimposed planes, preferably revolving or rotating about a vertical axis, with working edges effecting mixing of the material and providing an optional shredding effect being used, in which heating is conducted at least partially, preferably completely, by impinging mechanical energy or friction onto the material.

4. The method according to any one of claims 1 to 3 **characterized in that** the mixing and/or shredding tools stuff or force-feed the carrier material or the mixture in a filling way into a discharge unit housing directly connected to the reactor or cutting compactor, preferably into a conveyor spiral, barrel extruder or double-lead screw while constantly maintaining pressure or density as well as the material's pourability and lumpiness.

5. The method according to any one of claims 1 to 4 **characterized in that** at least polymeric or macromolecular material, especially a natural polymer, for example cellulose or lignin, or a synthetic polymer, plastic for example, preferably a thermoplastic or non-crosslinkedduroplastic, or a natural or synthetic resin is used as carrier material.

6. The method according to any one of claims 1 to 5 **characterized in that** fibers and carrier material are added successively to the reactor or cutting compactor, wherein the fibers are preferably added to the carrier material that was preheated beforehand, and more preferably to already softened carrier material.

7. The method according to one of claims 1 to 5 **characterized in that** fibers are added to the reactor or cutting compactor and treated simultaneously with the carrier material, wherein a carrier material already filled with fibers is added more preferably, in which both carrier material and fibers are already present or amalgamated with each other, e.g., wood, cellulose, lignin or pectin containing wood fibers.

8. The method according to any one of claims 1 to 7 **characterized in that**, in particular if thermoplastic polymeric material is used as carrier material, treatment of the material inside the reactor or cutting compressor is performed at a temperature higher than glass transition temperature and below the melting range, preferably at a temperature at which the material is in a softened state, preferably within the VICAT softening point range (according to DIN 306, A, 10 N, 50 K/h), and through which the material will preferably be crystallized, dried and/or purified, most preferably within a single, joint step.

9. The method according to any one of claims 1 to 8 **characterized in that** the fibers are used in an amount between 10 and 90 weight percent relating to the total weight of the mixture, where, if non-hardened duroplastic resin or polymeric material is used, fibers are added in an amount of more than 70 weight percent, in particular between 80 and 90 % weight percent.

10. The method according to any one of claims 1 to 9 **characterized in that** treatment within the reactor or cutting compactor is performed at vacuum conditions, in particular within low and medium vacuum ranges.

11. The method according to any one of claims 1 to 10 **characterized in that** inorganic fibers derived, for example, from glass or graphite, and/or organic fibers such as, for example, wood fibers, in particular palm, bamboo, hemp, and/or sisal fibers are used as fibers.

12. The method according to any one of claims 1 to 11 **characterized in that** fibers have a length of more than 5 mm, preferably between 10 and 20 mm.

13. The method according to any one of claims 1 to 12 **characterized in that** conclusively, by constantly maintaining pressure and density as well as pourability and lumpiness, the mixture is deployed from the reactor or cutting compressor and subjected to further compression like, for example, an extrusion.

14. The use of an apparatus to perform the method according to one of claims 1 to 13 with a reactor or cutting compressor, and a connected discharge unit, preferably a conveyor spiral, barrel extruder or double-lead screw, in which for mixing and preheating material within the reactor or cutting compressor, a mixing and/or shredding tool will be applied that is arranged on at least one and optionally on various superimposed planes, preferably revolving or rotating about a vertical axis, with working edges effecting mixing of the material and having an optional shredding effect, in which heating is conducted at least partially, preferably completely, by impinging mechanical energy or friction onto the material, and whereby the mixing and/or shredding tools stuff or force-feed the carrier material or the mixture in a filling way, into a discharge unit housing directly connected to the reactor while constantly maintaining pressure or density as well as the material's pourability and lumpiness.

## Revendications

1. Procédé pour produire un matériau polymère rempli avec des fibres plutôt longues, les fibres, d'une longueur minimale de plus de 2 mm et présentant une certaine humidité résiduelle d'environ 5 à 8 %, et un matériau de support étant mélangés et réchauffés dans un réacteur ou compresseur coupant sous mouvement continu et éventuellement pendant le concassage du matériau de support et sous conservation continue de la propriété d'écoulement ou de la consistance, caractérisé en ce queles conditions, notamment la température, dans le réacteur ou dans le compresseur coupant sont ajustés en sorte que les fibres sont séchées jusqu'à atteindre une humidité résiduelle la plus basse possible, à laquelle les fibres sont à peine suffisamment flexibles pour ne pas craquer, ni pendant le traitement dans le réacteur ou dans le compresseur coupant, ni pendant une éventuelle compression successive, par exemple une extrusion.

2. Procédé selon la revendication 1, **caractérisé en ce que** les fibres sont séchées jusqu'à atteindre une humidité résiduelle comprise entre 1 et 2 %.

3. Procédé selon la revendication 1 ou 2, caractérisé en ce pour mélanger et réchauffer un matériau de support et les fibres dans le réacteur ou compresseur coupant est utilisé au moins un outil de mélange et/ou concassage, éventuellement disposé sur plusieurs niveaux superposés sur le pourtour et notamment pouvant tournerautour de un axe verticale, avec des bords de travail agissant pour mélanger et éventuellement concasser la matière, le réchauffement étant au moins en partie, de préférence complètement effectué par application d'énergie mécanique ou friction sur le matériau.

4. Procédé selon une des revendications 1 à 3, **caractérisé en ce que** les outils de mélange et/ou de concassage rentrent ou pressent par alimentation forcée à la manière d'une spatule le matériau de support ou le mélange dans un boîtier d'une unité d'éjection directement reliée au réacteur ou au compresseur coupant, de préférence d'une vis sans fin, une vis d'extrusion ou d'une double vis, tout en conservant continuellement la pression ou la densité ainsi que la propriété d'écoulement ou la consistance du matériau.

5. Procédé selon une des revendications 1 á 4, **caractérisé en ce que** au moins un matériau polymère ou macromoléculaire, notamment un polymère naturel, par exemple de la cellulose ou de la lignine, ou un polymère synthétique, par exemple une matière synthétique thermoplastique, de préférence une matière synthétique duroplastique non réticulée, ou une résine naturelle ou synthétique est utilisé(e) comme matériau de support.

6. Procédé selon une des revendications 1 à 5, **caractérisé en ce que** les fibres et le matériau de support sont ajoutés dans le réacteur ou compresseur coupant l'un après l'autre, les fibres étant de préférence ajoutées au matériau de support, déjà préchauffé, notamment ramolli.

7. Procédé selon une des revendications 1 à 5, caractérisé en ce queles fibres sont ajoutées dans le réacteur ou compresseur coupant et traitées en même temps que le matériau de support, un matériau de support déjà rempli avec des fibres étant notamment ajouté, dans lequel le matériau de support et les fibres sont déjà tous les deux présents ou amalgamés, par exemple du bois, de la cellulose, lignine ou pectine, lequel contient des fibres de bois.

8. Procédé selon une des revendications 1 à 7, **caractérisé en ce que** notamment quand un matériau polymère thermoplastique est utilisé comme matériau de support, le traitement du matériau dans le réacteur ou compresseur coupant est effectué à une température supérieure à la température de transition vitreuse et inférieure à la gamme de fusion, notamment à une température à laquelle le matériau est présent dans un était ramolli, de préférence dans la gamme du température de ramollissement Vicat (selon DIN 306, A, 10N, 50 K/h), et **en ce que** par cela le matériau est de préférence cristallisé, séché et/ou nettoyé, notamment dans une seule étape commune.

9. Procédé selon une des revendications 1 à 8, **caractérisé en ce que** les fibres sont utilisées en une quantité de 10 à 90 % en poids par rapport au poids total du mélange, des fibres en une quantité de plus de 70 % en poids, notamment entre 80 et 90 % en poids, étant ajoutées quand une résine ou un matériau polymère duroplastique non durci(e) est utilisé comme matériau de support.

10. Procédé selon une des revendications 1 à 9, **caractérisé en ce que** le traitement est effectué dans le réacteur ou compresseur coupant sous des conditions de vide, notamment dans la gamme du vide primaire ou secondaire.

11. Procédé selon une des revendications 1 à 10, **caractérisé en ce que** des fibres anorganiques, par exemple de verre ou de graphite, et/ou des fibres organiques, par exemples des fibres de bois, notamment des fibres de palmier, bambou, chanvre et/ou sisal sont utilisées comme fibres.

12. Procédé selon une des revendications 1 à 11, **caractérisé en ce que** les fibres ont une longueur de plus de 5 mm, de préférence de entre 10 et 20 mm.

13. Procédé selon une des revendications 1 à 12, **caractérisé en ce que** en conclusion le mélange est éjecté du réacteur ou compresseur coupant sous conservation de la pression ou de la densité ainsi que de la propriété d'écoulement ou de la consistance, et assujetti à une compression ultérieure, par exemple une extrusion.

14. Utilisation d'un dispositif pour effectuer le procédé selon une des revendications 1 à 13, avec un réacteur ou compresseur coupant et une unité d'éjection reliée à celui-ci, de préférence une vis sans fin, une vis d'extrusion ou une double vis, au moins un outil de mélange et/ou concassage, éventuellement disposé sur plusieurs niveaux superposés sur le pourtour et notamment pouvant tourner autour d'un axe verticale, avec des bords de travail agissant pour mélanger et éventuellement concasser la matière, étant disposé dans le réacteur ou compresseur coupant pour mélanger et réchauffer un matériau de support et les fibres, le réchauffement étant au moins en partie, de préférence exclusivement effectué par application d'énergie mécanique ou friction sur le matériau, les outils de mélange et/ou de concassage rentrant ou pressant à la manière d'une spatule le matériau de support ou le mélange dans un boîtier d'une unité d'éjection directement reliée au réacteur ou au compresseur coupant, tout en conservant continuellement la pression ou la densité ainsi que la propriété d'écoulement ou la consistance du matériau.
